(19)

**Europäisches Patentamt**

**European Patent Office**

**Office européen des brevets**

(11) **EP 4 759 992 A1**

(12) **EUROPEAN PATENT APPLICATION**

(43) Date of publication:
**17.06.2026 Bulletin 2026/25**

(21) Application number: **24218809.2**

(22) Date of filing: **10.12.2024**

(51) International Patent Classification (IPC):
*D06M 10/02* (2006.01)    *D06M 10/08* (2006.01)
*D06M 10/06* (2006.01)    *D06M 14/28* (2006.01)
*D06M 15/705* (2006.01)   *D06M 101/22* (2006.01)
*B01D 67/00* (2006.01)    *B01D 69/10* (2006.01)
*D06M 101/32* (2006.01)   *D06M 101/30* (2006.01)

(52) Cooperative Patent Classification (CPC):
**D06M 10/025; B01D 67/009; B01D 69/105;
B01D 69/1071; D06M 10/06; D06M 10/08;
D06M 14/28; D06M 15/705;** B01D 2323/34;
B01D 2325/42; D06M 2101/22; D06M 2101/30;
D06M 2101/32; D06M 2200/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Sefar AG
9410 Heiden (CH)**

(72) Inventors:
• **HOSSAIN, Mohammad Mokbul
  9410 Heiden (CH)**
• **CHAKHARI, Karim
  9000 St.Gallen (CH)**
• **SCHMIDT, Philip
  8505 Pfyn (CH)**

(74) Representative: **Wunderlich & Heim
Patentanwälte
PartG mbB
Irmgardstraße 3
81479 München (DE)**

(54) **METHOD FOR IMPROVING MEMBRANE COATING PROPERTIES FOR ION EXCHANGE MEMBRANE APPLICATIONS AND WOVEN MESH FABRIC HAVING IMPROVED MEMBRANE COATING PROPERTIES FOR ION EXCHANGE MEMBRANE APPLICATIONS**

(57)    The invention relates to a method for improving membrane coating properties for ion exchange membrane applications of woven mesh fabric as a reinforcement fabric, the woven mesh fabric comprising warp and weft monofilament fibers of at least one of the following polymers: polyphenylene sulfide, a polyether ether ketone and liquid crystal polyester, wherein one monofilament fiber is made of only one of the polymers. The method comprises after weaving the woven mesh fabric a fixation step, wherein the woven mesh fabric is subjected to at least one thermal treatment to fix the mesh opening into desired dimensions and stabilize the monofilament fibers of the woven mesh fabric as well as to remove surface contaminants from the monofilament fibers, and one or more preparation steps are carried out comprising a plasma pre-treatment step and/or a plasma etching step. Further the method comprises a subsequent coating step of depositing a plasma coating on the woven mesh fabric by means of plasma polymerization incorporating functional groups at least one selected from a group consisting of hydroxyl group, carboxyl group, amino group and sulfonate group, wherein the woven mesh fabric comprises a filament diameter between 10 $\mu$m and 60 $\mu$m and a mesh opening of 20 $\mu$m or more and having a fabric thickness between 20 $\mu$m and 80 $\mu$m.

Fig. 4

**Description**

The invention relates to a method for improving membrane coating properties for ion exchange membrane applications with a woven mesh fabric as a reinforcement fabric, the woven mesh fabric comprising warp and weft monofilament fibers.

Further the invention also relates to woven mesh fabric having improved membrane coating properties for ion exchange membrane applications as a reinforcement fabric, wherein the woven mesh fabric comprises warp and weft monofilament fibers.

Considering the hypothesis of anthropogenic climate change, we are facing a major challenge in the energy and environmental sectors, therefore the search for alternative energy strategies has become critical to ensure future world energy needs.

Hydrogen serves as an inexpensive and abundant energy source, contributing to a sustainable energy future with zero carbon emissions. In terms of compatibility, it can be produced using renewable energy resources, making it a viable alternative to fossil fuels. Such a source is critical in the transition to greener energy systems and in addressing the challenges of climate change. It has significant applications in various industries, enhancing energy security and reducing dependence on traditional fuels.

Hydrogen is increasingly recognized for its versatility and potential to decarbonize various industrial and commercial applications. Its primary uses span several sectors, including energy, chemicals and metallurgy, and contribute significantly to the transition to a low-carbon economy. Among the many applications, hydrogen is being used in industrial sectors such as petroleum and ammonia production due to market demand. It can also decarbonize transportation, construction, heating, and serve as energy storage in the power sector. While hydrogen offers many opportunities, its interaction with metals poses risks that require careful management.

Hydrogen production for large-scale industrial applications is evolving, with several promising methods emerging. The most notable techniques include steam methane reforming, electrochemical water splitting, biomass gasification, and marine renewable energy systems. Considering that the footprint of hydrogen technologies depends on their production processes and energy sources, water electrolysis is a very promising and desirable approach due to its compatibility with different types of electricity generation.

While conventional alkaline electrolysis technology is not as efficient and proton exchange membranes (PEMs) have demonstrated the cost issue, anion exchange membrane (AEMs) water electrolyzer is a promising technology built in a stack with solid polymer membranes to provide high volumetric energy density and it is compatible with non-precious metal catalyst electrodes resulting in cost reduction of hydrogen production. Also cation exchange membranes (CEM) are known.

All of these PEM and AEM processes use an ion exchange membrane (IEM) and membrane performance is critical to ensuring long-term operation in electrochemical separation applications. The major challenge with ion exchange membranes is their low chemical and thermal stability. Therefore, they are combined with a polymer backbone i.e. a woven polymer fabric as base or stability layer. Degradation of the used polymer backbone leads to chain rift, molecular weight reduction and increased membrane brittleness, especially under alkaline conditions. The performance of the membrane is profoundly influenced by the support structure and the ionomer polymer together as a composite.

The industrial PEM coating process involves many methods to apply protective and functional coatings to materials, in particular for applications in fuel cells. This process is quite important in order to enhance the performance and durability of components used in various industrial applications. Transitioning from batch to continuous processes is necessary for mass production while ensuring that the coatings maintain their performance characteristics under industrial conditions. The process depends on several parameters and needs careful control of the main parameters such as current and time to achieve desired coating properties in terms of thickness and adhesion.

The production of ion exchange membranes (PEM, CEM or AEM) typically involves polymer synthesis, casting, and functionalization, often as a coating. Different application techniques are utilized, such as spraying, rolling, and dipping or impregnation, to guarantee a uniform coating. Typically, the ionomer coating includes a combination of polymers and conductive materials, such as graphite, to enhance electrical conductivity and corrosion resistance. In case of an impregnation process the membrane passes through an impregnation chamber to enhance its chemical properties. In a later stage the coated membrane is passed through a tunnel furnace for curing, ensuring that the coating adheres properly and enhances the membrane's overall properties.

A base ionomer polymer can be dissolved or processed into a solution and applied directly onto a carrier material, such as a porous or inert substrate. This carrier provides mechanical support, but the functionalized polymer itself forms the active ion-conductive layer. Ionic groups such as sulfonic acid for PEM or quaternary ammonium for AEM are introduced to the polymer to ensure conductivity. The resulting product is a supported membrane, where the carrier is simply a support structure, not a functional component of the membrane itself.

Therefore, the terms "ion exchange membrane", "membrane", "electrolyte membrane" and "ion exchange matrix" are used interchangeable in this explanation. Also, the terms "membrane coating", "ionomer coating" and "ionomer material" are used interchangeable.

The incorporation of reinforcing textiles into ion exchange membranes significantly improves their mechanical stability and durability. Several studies have demonstrated the benefits of these reinforcements in reducing mechanical stress and improving performance under operating conditions.

In terms of improving mechanical and dimensional stability, it has been shown that reinforced membranes, such as those with woven web layers, exhibit improved resistance to mechanical failure during operation, ensuring no failure under normal conditions. In addition, the use of porous polyethylene as a support layer in tandem sulfonated polyphenylene membranes has shown a remarkable increase in stretchability (up to 453%) and durability, surviving over 20,000 cycles in accelerated tests.

Sulfonated polyetheretherketone (sPEEK) reinforced membranes have been found to be particularly susceptible to chemical degradation from reactions with hydroxy radicals during the electrolysis process. This interaction can lead to cationization of the polymer, followed by bond-breaking reactions that negatively affect the membrane structure. Mechanical properties can also be affected by the changing hygrothermal operating conditions of the membrane assemblies. Elevated temperatures exacerbate this problem, resulting in microstructural damage and reduced mechanical properties. As a result, the lifetime of PEEK-reinforced membranes is significantly reduced. Without optimal processing conditions during the manufacture of PEEK composites, high porosity and poor consolidation can be achieved, indicating degradation and affecting the overall performance of the composite membrane.

Other recent innovations have focused on non-fluorinated polymers, specialized structures, and methods to assess membrane integrity.

A variety of ionomer polymers and their respective backbones have been studied and developed to overcome the challenging issues and ensure membrane integrity, such as polystyrene (PS), polyphenylene oxide (PPO), polysulfone or fluorinated polymers, poly-ethylene-co-tetrafluoroethylene (ETFE), polyetherimide (PEI), polyvinyl alcohol (PVA), polyether ether ketone (PEEK), poly(arylene ether ketone) and poly-carbazole.

On the other hand, researchers have also studied the degradation mechanism of reinforced membranes, particularly in fuel cell applications. This is critical to improving the durability and performance of these membranes in demanding environments.

Woven monofilament fabrics made from polymers such as PEEK, polyphenylene sulfide (PPS), perfluoroalkoxy alkanes (PFA), fluorinated ethylene propylene (FEP), or liquid crystal polyester (LCP) are an excellent choice of polymers due to their distinct superior properties such as well-defined geometry including mesh opening or porosity and fiber diameter, chemical and temperature stability, high mechanical strength. The fabric can have regular openings of square or rectangular configuration. Proper embedding of these woven meshes results in a more physically and ionically stable composite membrane. However, there are very sporadic literature data on the adequate preparation of the supporting woven polymeric structure, which is a key element for the proper functioning of membrane reinforcement and optimal consolidation. Traditional woven fabrics made from these polymers are often not suitable for these applications due to integration incompatibility with the ion exchange matrix.

Despite their advantages, the development of composite reinforced ion exchange membranes faces several technical hurdles. The difficulty of properly embedding the woven fabric with the ion exchange membrane remains a major issue, which in turn reduces the ionic conductivity. The reinforcement material, due to its hydrophobic and inert nature, can act as an incompatible barrier object in the overall composite, causing a problem with ionomer filling in the pores. As a result, a variety of interfacial problems occur, such as bubbles, coating defects, and interfacial cracks and fractures.

It is therefore an **object** of the invention to provide a method for improving membrane coating properties for ion exchange membrane applications with woven mesh fabric as a reinforcement fabric as well as to provide a woven mesh fabric having improved membrane coating properties for ion exchange membrane applications as a reinforcement fabric.

According to the invention this object is achieved on the one hand by a method having the features of claim 1 and by a woven mesh fabric having the features of claim 17.

Preferred embodiments of the invention are stated in the respective dependent claims.

According to the inventive method the woven mesh fabric comprising warp and weft monofilament fibers of at least one of the following polymers: polyphenylene sulfide (PPS), polyether ether ketone (PEEK), perfluoroalkoxy alkanes (PFA), fluorinated ethylene propylene (FEP) and liquid crystal polyester (LCP), wherein one monofilament fiber is made of only one of the polymers. Other family members of the PPS polymer are polyethersulfone (PESU), polysulfone (PSU) and polyphenylsulfone (PPSU). Polyaryl ether ketone (PAEK) is also a family member of PEEK.

Based to the invention after weaving of the woven mesh fabric a fixation step is carried out, wherein the woven mesh fabric is subjected to at least one thermal treatment between 240°C and 350°C to fix the mesh opening into desired dimensions and stabilize the monofilament fibers of the woven mesh fabric as well as to remove surface contaminants from the monofilament fibers.

Following one or more preparation steps are carried out comprising: a plasma pre-treatment step of the woven mesh fabric is carried out for further fine cleaning the surface of the woven mesh fabric especially by removal of impurities, strong adhering dust particles and organic, inorganic and microbial contaminants from the filament surface, and/or a plasma etching step of exposing the woven mesh fabric to plasma for etching the surface of the monofilament fibers of the woven mesh fabric to an average roughness between 30 nm and 200 nm.

After the one or more preparation steps a subsequent coating step of depositing a plasma coating on the woven mesh fabric by means of plasma polymerization incorporating functional groups at least one selected from a group consisting of hydroxyl group, carboxyl group, amino group and sulfonate group. The one or more preparation steps and the coating step all are performed in a plasma chamber having a plurality of rollers in a roll to roll system which operates with a radiofrequency of about 13.56 MHz, having a first electrode set and a second electrode set within the plasma chamber, and the woven mesh fabric being passed through plasma zones between the electrode sets, thereby having treatment on both sides of the woven mesh fabric.

According to the invention the woven mesh fabric comprises a filament diameter between 10 $\mu$m and 60 $\mu$m and a mesh opening of 20 $\mu$m or more and having a fabric thickness between 20 $\mu$m and 80 $\mu$m.

One of the basic ideas of the invention is to provide a base structure that is robust with respect to the application and environmental conditions, and on which the membrane respectively the membrane coatings can be securely fixed, but which does not affect the electrolysis itself.

In this context, it has been recognized that fabrics made of polyphenylene sulfide, a polyether ether ketone and liquid crystal polyester, are particularly suitable as a base or carrier material because they can withstand the demanding environmental conditions well.

Preferably only monofilament fibers are used. It is possible to use a woven fabric having monofilament fibers of only one of the above-mentioned polymers but also having monofilament fibers made of different polymers, i.e. monofilament fibers of PPS in the warp direction and monofilament fibers of PEEK in the weft direction. Also changing the type of monofilament fiber in one direction is possible.

However, in order to make high performance ion exchange membranes, the invention provides for a surface treatment of the fabric so as to provide a good and durable bond between the fabric and the ion exchange membrane(s). In addition, it has been recognized that it is advantageous for the application to provide the largest possible mesh size, which in turn reduces the stability of the fabric during ion exchange coating process.

The inventors realized that a good chemical bond and adequate adhesion between the woven porous structure and the ionomers of the ion exchange membrane are very necessary to overcome the interfacial problems. In addition, there is often limited compatibility between the reinforcement material and the ionomer, which can affect the overall efficiency of the fuel cell and its resistance to harsh chemical environments. To solve this many researchers have also tried to functionalize the fiber directly during the spinning process, but with very limited success due to spinnability and placing functionalities on the filament surface. In addition, functional groups may eventually be affected during the washing and fixing process of the woven fabric. The inventors found that post-functionalization of pre-fixed and dimensionally stabilized woven mesh by low-temperature plasma is a simple and upscalable technique that eliminates these problems. Therefore, an idea of the inventions is to design and prepare a precise woven mesh structure that would be compatible with the membrane coating at a later stage.

A basic insight of the invention is the identification of the influence of fabric geometry and surface properties to achieve an ideal reinforcement or basis for membrane coating. Textile or fabric structure and construction in turn depend on many factors, such as the type of weave, the type of fiber content, the fiber fineness, the mesh size, i.e., the number of threads per centimeter. Compared to flat surfaces (films, polymeric solids, etc.), fabrics have complex architectures that actually consist of two surfaces, one of which is macroscopic and visible to the naked eye and another which is the actual inner surface comprised of the interfilament space and the pore size distribution. It has been found that the ion exchange capacities closely related to the textile structure such as mesh pore size, filament diameter and weave construction such as plain, twill. The plain weave structure having larger mesh opening is more effective as the physical barrier for ion exchange could be reduced. Furthermore, in addition to plasma process parameters and plasma coating properties, the capillary phenomenon is strongly influenced by the mesh geometry, in particular the mesh opening (space between two adjacent filaments) and the yarn (filament) diameter.

In this specification the term "woven fabric" is used as a synonym for "mesh" or "textile" or "reinforcing textiles" or "fabric" or "woven structure" according to the invention, which all describe the inventive woven monofilament fabric as a functional reinforcement for ion exchange membranes.

It was found that a plain weave structure of the woven fabric having relatively large mesh opening is advantageous for obtaining higher performance of the ion exchange membrane. On the other hand, this combination makes the woven fabric dimensionally more unstable. It is therefore an object to fix and dimensionally stabilize the woven mesh through a thermal treatment of the woven mesh fabric. Therefore, the woven mesh fabric is subjected to at least one thermal treatment between 240°C and 350°C which fixes and dimensionally stabilizes the monofilament fibers of the woven mesh fabric with each other. In other words, the individual monofilament fibers are fixed to each other at their points of contact by the heat treatment. These contact points are located in particular where the weft and warp threads overlap. The woven mesh fabric can be stretched or overfeeding in length (warp) and width (weft) directions under a suitable heat setting to bring the mesh geometry i.e. mesh opening or pore size to predetermined dimensions. Thus, a precious mesh pore size can be obtained and stabilized tailoring process parameters such as temperature, contact time (material line speed), stretching or tensioning.

The thermal treatment further removes contaminants, such as spin finishes from the filament surface. Spin finishes are applied during spinning and weaving processing of the monofilament fiber as well as monofilament woven fabric.

It has been found that in view of the further preparation and coating step(s) as well as for the effectivity of a produced ion exchange membrane the woven mesh fabric should comprise a filament diameter between 10 $\mu$m and 60 $\mu$m, preferably between 20 $\mu$m and 50 $\mu$m and a mesh opening of 20 $\mu$m or more, preferably between 75 $\mu$m and 225 $\mu$m and a fabric thickness between 20 $\mu$m and 80 $\mu$m, preferably between 30 $\mu$m and 70 $\mu$m. The fabric may have any geometrical mesh openings but preferably have regular openings of square or rectangular configuration.

In principle a classical washing process can be optionally used prior to the thermal treatment process. However, the washing process has some drawbacks due to displacement of monofilament in the fabric and as a consequence, required mesh pore size cannot be maintained. Therefore, thermal treatment can be optimized in a way that it serves additionally as an alternative treatment to wet washing. In addition to energy saving the use of chemical during wet wash process which is very hazardous for both human and water world can be avoided.

The invention further proposes one or more preparation steps based on a plasma pre-treatment and/or plasma etching and a following coating step of depositing a plasma coating on the woven mesh fabric. These steps are technologies for improving the surface properties of fibers and fabrics without changing their bulk properties. They are used to enhance the surface properties by increasing their adhesion and enhancing their wettability. Wetting plays a crucial role in enhancing adhesion strength in ion exchange membranes by improving the interaction between the fibers and the ion exchange matrix. This is achieved through various mechanisms, including surface modification, chemical interactions, and mechanical interlocking, which collectively contribute to stronger interfacial adhesion. However, for some ion exchange membranes the specific functional group in the plasma coating plays a dominant role in achieving ultimate membrane performance rather than wettability.

The plasma pre-treatment aims for a further fine cleaning of the surface of the woven mesh fabric, especially by removal of impurities, strong adhering dust particles and organic, inorganic and microbial contaminants from the filament surface. Also, molecular groups on the surface of the monofilament fibers are activated.

The plasma etching exposes the woven mesh fabric to plasma for etching the surface of the monofilament fibers of the woven mesh fabric to an average roughness between 30 nm and 200 nm. This roughness creates an anchoring effect for the ion exchange membrane, by providing a better surface for bonding with the membrane chemistry. The etched and textured surface can be characterized by means of an Atomic Force Microscopy (AFM) to determine the average surface roughness.

The subsequent coating step of depositing a plasma coating on the woven mesh fabric by means of plasma polymerization and thereby incorporating functional groups at least one selected from a group consisting of hydroxyl group, carboxyl group, amino group and sulfonate group, is for preparing the surface for a better chemical bonding with the membrane chemistry which also improves wettability conferred by the increase in the surface energy. By this step functional groups are created an embedded in the coating. These ionic groups further enhance the ion exchange capacity of the ion exchange membrane.

To mitigate adhesion issues in ion-exchange or electrolyte membrane, several inventive strategies are provided, focusing on enhancing performance and durability. The invention provides a solution which encompasses modifications in properties of the reinforcing/supporting woven structure for the membrane reinforcement. The solution is based on plasma coating treatments which can create functional surfaces that promote stronger bonds, reducing the likelihood of delamination. Depositing an ultrathin layer of a plasma polymer on the surface addresses such as lowering the contact angle of the supporting woven monofilament fabric surface. This hydrophilic character eventually stimulates the ion selectivity and mass transport and water management.

The one or more preparation steps and the coating step may be performed in a plasma chamber having a plurality of rollers and/or expanders in a roll to roll system which operates with a radiofrequency, preferably of about 13.56 MHz. The chamber further comprises a first electrode set and a second electrode set within the plasma chamber, and the and the woven mesh fabric being passed through plasma zones between the electrode sets, thereby having treatment on both sides of the woven mesh fabric. The chamber itself can be the ground electrode for these processes.

In a preferred embodiment the coating step is a plasma enhanced chemical vapor deposition (PECVD) process. Specific functionalization of woven mesh can be carried out via different routes such as wet-chemical methods, plasma treatments, PECVD method, ion beam implantation, combination of methods thereof. Though permanent chemical functionalities can be incorporated via conventional methods other than PECVD method, but the micron-thick coating adversely affect the ion exchange performance in the composite. The coating thickness during conventional wet-chemical treatment cannot be reduced because of lower density of functionality as well as uniformity issues. Furthermore, the conventional coatings may lack the multifunctionality and adaptability that nanocoatings provide, potentially limiting their effectiveness in advanced applications.

In the field of textile finishing, PECVD technology shows distinct advantages because it is a dry and environmentally friendly process. In addition, due to enormous variety of feeding gases which can be used to perform a great number of surface chemistry, a multiple variety of chemical functions can be incorporated onto the textile surface to obtain different chemical and physical features. Non-thermal plasma has been intensively used for the practical industrial requirements to provide high quality, high productivity, low cost and environmentally clean surface treatment processes.

It is quite obvious that plasma treatment improves the crosslinking degree in plasma polymer when compared to classical polymerization. Explaining more the plasma polymerization process; monomer precursors which are already vaporized are pumped to the vacuumed plasma chamber. The energy input generates then excited electrons during glow discharge and lead to break molecules into free electrons, ions, radicals and excited molecules. Afterwards these free radicals and excited molecules recombine, condense and polymerize on the substrate, the ions and electrons crosslink or form chemical bonds with the already deposited polymer, so the properties of plasma polymers are not only determined by precursors but also by the deposition parameters. By mean of such a quite controlled polymerization process pinhole free, cross-linked and dry deposition of the polymer by the plasma polymerization is ensured and the difficulties faced during wet chemical polymerization such as non-uniform coatings, the impurities by the solvent produces defective coatings due to the presence of solvent can be avoided.

Plasma polymer coating like the inventive nanocoating differs from conventional polymer by a high density of functional groups per volume, a highly cross-linked and branched plasma polymer network, an only nanometer thick coating (<100 nm), a high adhesion of coating to the substrate, and no change of bulk properties of the substrate. The retention of functional groups in the resulting plasma polymer during plasma polymerization is one of the key challenges to obtain high degree of functionality. Thus, new unique properties can be introduced to the polymeric substrate materials such as high precision woven fabrics suitable for the further processing with the ion-exchange membrane coating. Depending on the membrane type and application, different functionals ionic groups such as sulfonate (SOs), amine ($NH_2$), carboxyl (COOH), hydroxyl (OH) are embedded into the nano-scaled plasma polymer coating. In addition to reinforcement, the modified filament can function as ion-exchanger. The modified woven mesh exhibits lower internal resistance, resulting in higher ion conductivity and process efficiency. These proposed groups are suitable for long-term coating stability. It is furthermore advantageous that the functional layer is formed without an additional tempering step or post treatment step. According to the inventive method a nano-scaled plasma polymer coating is deposited on the fabric by means of plasma polymerization of a halogen free precursor monomer and/ or mixture of hydrocarbon and reactive gas by PECVD method. The halogen free precursor monomer and gases are, for example, ammonia, acrylic acid, carbon dioxide, 3-allyloxy-1,2-propanediol and/or hydrocarbon precursors.

According to the inventive method, it is proposed to prepare a woven fabric that imparts reinforcing properties to an ion exchange membrane. These characteristics can be observed on the one hand on the functional side, improving the ion exchange capabilities, and on the other hand on the physical side, reinforcing or strengthening the ion exchange membrane and preventing dimensional changes during applications by improving mechanical properties.

It is preferred that the at least one functional group is chosen to match an ionic group of the ion exchange membrane and/or to improve the wettability of the woven mesh fabric for the ion exchange membrane during coating of the woven mesh fabric. The choice of the ionomer material for the ion-exchange membrane and the respective adequate functionalization of the reinforcement woven mesh fabric or textile is relevant for the performance of the cell and often its performance is the key bottleneck. The functionalization of the woven mesh fabric should be compatible with the ionic group present in membrane chemistry. Therefore, a surface functionalization with a specific functional group should address the compatibility issue and in turn higher ion-exchange capacity. In fact, cation exchange membranes (CEM) contain negatively charged functional groups such as - $SO_3^-$ , -COO-, and allow passage of cations while rejecting anions.

Anion exchange membranes (AEM), on the other hand, contain positively charged functional groups such as $-NR_3^+$, -$NR_2H^+$, and allow passage of anions while rejecting cations. Therefore, the ion exchange membrane having reinforcement fabric should be designed in such a way that it provides excellent properties in ion-exchange performance as well as physical performance dedicated to each application.

Preferably the one or more preparation steps are carried out at low-pressure plasma conditions under protective atmosphere and/or the coating step is a low pressure plasma polymerization process. These steps can also be low-temperature and low pressure plasma processes. Low-temperature and/or low pressure plasma processes are preferred as these processes relatively tensionless for the woven mesh fabric. In connection with the inventions low pressure plasma is carried out in the range of 0.02 mbar to 0.5 mbar and low-temperature plasma in the range of 20°C to 50°C.

In a preferred embodiment the plasma pre-treatment step is carried out using an inert gas or a reactive gas or a gaseous mixture thereof and/or the plasma etching step is carried out using oxygen or fluorinated etchant gases or a gaseous mixture thereof.

The cleanliness of the woven mesh fabric as reinforcing and supporting layer is a relevant factor to succeed a good and uniform deposition of ion-exchange membrane polymers for an ion exchange membrane and ensure a consistency in overall adhesion. By means of plasma pre-treatments using inert gases like, argon, helium and reactive gases such as nitrogen, carbon dioxide and oxygen and/or their mixtures, surface contaminants and impurities can be removed from the polymer and at the same time oxygenated polar groups can be directly incorporated at the surface. This results in enhanced hydrophilicity and negative charge density, significantly improving adhesion performance. The combination of adhesion and cohesion determines the overall performance of the composite integrity.

The surface roughness of fiber improved by the plasma etching step increases the number of possible anchoring sites to the membrane coating, which lead to higher adhesion strengths. A mixture of different plasma process gases can be used for the etching of textile polymers such as PEEK, PPS, LCP, PSU, PESU, PAEK, PFA, FEP. Oxygen and a fluorinated gas such as tetrafluoromethane ($CF_4$), when mixed together for use in plasma etching, create the oxyfluoride ion (OF-). The oxyfluoride ion is a powerful etching agent for polymeric substances. This ion is particularly adept at cutting the carbon-carbon molecular bonds in the polymer backbone and removing the molecule quickly.

Plasma etching processes are asked to produce patterns from the nanometer to the micrometer range with the same efficiency. The very severe requirements in terms of etch rate, selectivity, profile control and surface damage plasma etching processes. The key parameters of the plasma-surface interaction vary with each material upon the gas mixture, bias voltage and the ion bombardment. Mostly, the dominant parameter is the ratio of the neutral flux to ion energy flux.

One of the main problems of composite reinforced ion exchange membranes also referred to ion exchange membranes is the delamination of the fabric layers because of the poor adhesion between the fabric layers and the ion exchange matrix induced by mechanical stress and working conditions. In order to improve the adhesion, increasing the surface roughness by plasma treatment such us $O_2$ ablation/etching results in increased area of contact between the membrane coating and the reinforcement substrate. This contributes to enhance the mechanical adhesion between the ionomer polymer of the ion exchange membrane and the woven fabric. In addition, increasing in $O_2$ content of plasma treated fabric surfaces may have resulted in surfaces more polar and wettable. This may contribute to the better penetration of the ion exchange matrix within the woven fabric which serves as reinforcement layer.

It is favored that in the coating step of depositing the plasma coating by means of the plasma polymerization incorporating the functional groups a reactive gaseous mixture such as nitrogen, carbon dioxide and/or ammonia with hydrocarbon is used. Alternatively, a monomer vapor consisting of a monomer for example, acrylic acid, 3-allyloxy-1 ,2-propanediol and/or hydrocarbon precursors or of a mixture of monomer with helium or argon can be used.

The one or more preparation steps and the subsequent coating step being carried out in one processing stage, or two processing stages being temporally offset. A one processing stage according to this disclosure can be understood as the difference steps being carried out directly one after the other, preferably in the same reaction chamber. A two or more processing stage can be understood to mean that there is a time offset between the different processing steps. For example, the fabric may be transferred from one processing chamber to another.

Preferably the plasma power during the plasma pre-treatment step is lower than 5 $W/cm^2$ of electrode surface, preferably lower than 3 $W/cm^2$ of electrode surface or more preferably lower than 2 $W/cm^2$ of electrode surface.

In a preferred embodiment plasma power during the plasma etching step is lower than 1 $W/cm^2$ of electrode surface, preferably lower than 1000 $mW/cm^2$ of electrode surface or more preferably lower than 500 $mW/cm^2$ of electrode surface.

The plasma power during the plasma coating step may be lower than 1 $W/cm^2$ of electrode surface, preferably lower than 500 $mW/cm^2$ of electrode surface or more preferably lower than 200 $mW/cm^2$ of electrode surface.

The woven mesh fabric may be a one-sided or two-sided calendered by a calendering process.

To calender the woven mesh fabric prior to the one or more preparation steps the woven mesh may be passed between two rollers at raised temperature between 120°C and 200°C and a pressure between 200 $N/mm^2$ and 450 $N/mm^2$ and a material speed between 1 m/min and 4 m/min using a roll to roll calendering machine.

Calendering is a thermomechanical finishing process to compressing and smoothing a woven fabric under controlled conditions of time, temperature and pressure. Calendering machine is fundamentally consisting of two or more rollers stacked on top each other and woven fabric is passed through these heated and pressurized rollers. Different calendering effects on woven fabric can be obtained:

- Controlled fabric thickness

- One-sided calender effect

- Two-sided calender effect

- Smoothening / roughening

Depending on the ion exchange membrane application the physical properties of woven monofilament fabric such thickness, density, pore size and shape can be adjusted further by a calendering process, where parameters such as roller temperature, nip pressure, residence time (i.e. line speed) are to be considered to obtain required properties with a defined solidity. Furthermore, the properties of the woven fabric may have affected by the calendering conditions used. For example, the air permeability is reduced, and the shape of filament becomes flat.

In a referred embodiment the woven mesh fabric after the coating step a water contact angle of between 20° and 90°, preferably between 40° and 80° and more preferably between 50° and 70° for incorporated hydroxyl or carboxyl groups and between 80° and 145°, preferably between 110° and 135° for incorporated sulfonate and amino groups. The water contact angle is determined according to DIN EN ISO 19403:2020-04 for woven fabric P (explained with reference to table 1 in detail later) having a filament (warp or weft) diameter of 38 $\mu$m, a mesh opening (warp or weft) of 195 $\mu$m and a fabric thickness of 60 $\mu$m. As explained above, the wettability is an important characteristic of the substrate woven fabric for the deposition of the ion exchange membrane. It has been found that the above values improve the fixation to the substrate and thus the efficiency of the produced ion exchange membrane.

It is preferred that the average roughness after the plasma etching step is between 50 nm and 120 nm. This average roughness provided good characteristics for the subsequent deposition step.

Preferably the plasma coating has a thickness from 10 nm to 200 nm and preferably from 20 nm to 80 nm. For the end use of the electrolysis membrane, as already explained, it is desirable that the fabric has as large mesh opening as possible and having as little area as possible (specific surface to volume ratio). The preferred coating thicknesses take this into account, as they are sufficiently ultra-thin to yield increased total area of the membrane coating and as a consequence, higher ion exchange capacity. It is preferred that the average roughness is higher than the thickness of the plasma coating.

The treatment time for the coating step and for the pre-treatment step may be for each step around 4 minutes or less and for the plasma etching step around 8 minutes or less. These durations are sufficient to achieve the desired results of the respective steps but do not or only in a marginal amount affect the bulk properties of the woven fabric.

It has been found that it is beneficial wherein the temperature of the electrodes of the electrode sets and/or a chamber wall defining the plasma chamber is controlled to be between 30°C and 100°C preferably between 35°C and 80°C. Also, here these parameters are sufficient to achieve the desired results of the respective steps but do not or only in a marginal amount harm the fibers of the woven fabric.

Based on the inventive method, it is possible to produce a woven mesh fabric having improved membrane coating properties for ion exchange membrane applications as a reinforcement fabric, wherein the woven mesh fabric comprises warp and weft monofilament fibers of at least one of the following polymers: polyphenylene sulfide, a polyether ether ketone, perfluoroalkoxy alkanes, fluorinated ethylene propylene and liquid crystal polyester, and wherein one monofilament fiber is made of only one of these polymers, wherein the woven mesh fabric comprises a filament diameter between 10 $\mu$m and 60 $\mu$m and a mesh opening of 20 $\mu$m or more and having a fabric thickness between 10 $\mu$m and 80 $\mu$m.

The monofilament fibers of the woven mesh fabric are fixed and dimensionally stabilize to each other after weaving by subjecting the woven mesh fabric to a thermal treatment between 240°C and 350°C and surface contaminants being removed.

The woven mesh fabric being prepared by one or more preparation steps comprising: a plasma pre-treatment step of the woven mesh fabric is carried out for further fine cleaning the surface of the woven mesh fabric especially by removal of impurities, strong adhering dust particles and organic, inorganic and microbial contaminants from the filament surface and a plasma etching step of exposing the woven mesh fabric to plasma for etching the surface of the monofilament fibers of the woven mesh fabric to an average roughness between 30 nm and 200 nm.

According to the invention the woven mesh fabric being subsequently coated by depositing a plasma coating on the woven mesh fabric by means of plasma polymerization incorporating functional groups at least one selected from a group consisting of hydroxyl group, carboxyl group, amino group and sulfonate group. These groups serve as an ion exchanger and promote overall ion exchange efficiency.

In a preferred embodiment the woven mesh fabric has a water contact angle of between 20° and 90°, preferably 40° and 80° and more preferably between 50° and 70° for incorporated hydroxyl or carboxyl groups and f between 80° to 145°, preferably between 110° and 135° or sulfonate and amino groups. The water contact angle is determined according to DIN EN ISO 19403:2020-04.

In the following the invention is described further by way of a preferred exemplary embodiment illustrated schematically in the accompanying drawings:

Figure 1    shows an illustration of a fabric prior to the inventive treatment;

Figure 2    shows an illustration of a fabric after a plasma pre-treatment;

Figure 3    shows an illustration of a fabric after a subsequent plasma etching and an enlarged view thereof;

Figure 4    shows an illustration of a fabric after a subsequent plasma coating step and an enlarged view thereof;

Figure 5    shows a SEM image of a woven mesh;

Figure 6    shows two AFM images of etched PEEK fabric; and

Figure 7    shows two SEM images of an untreated fabric P followed by Nation coating and a SOs plasma coated fabric P followed by Nafion coating.

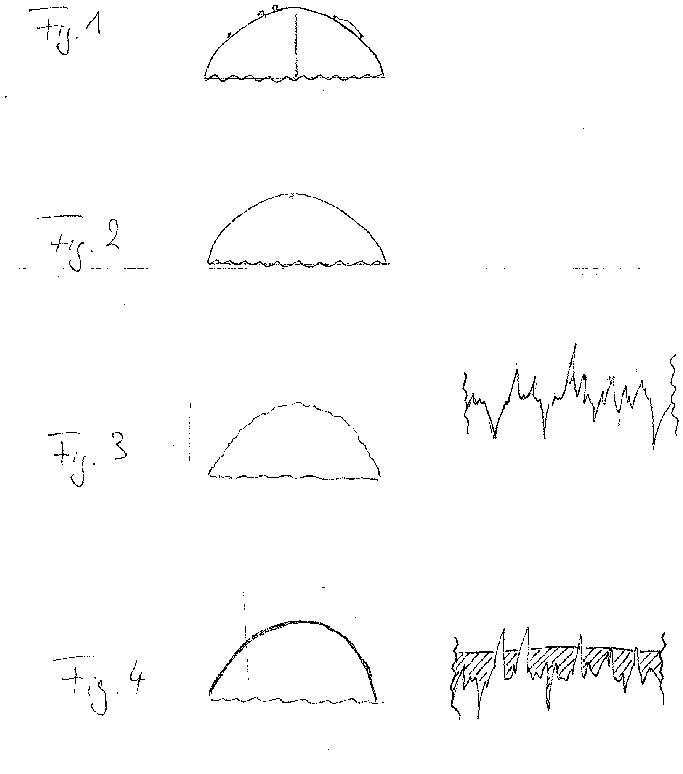

Figures 1 to 4 illustrates the same fabric before, during and after the inventive method, wherein only one monofilament fiber of polymeric material is show, for clarity reasons.

Figure 1 shows the fabric prior to treatment by the inventive method. Undecided particles are shown as impurities, strong adhering dust particles and organic, inorganic and microbial contaminants on the surface of the monofilament fiber.

Figure 2 shows the fabric of Figure 1 after a plasma pre-treatment. The undecided particles are removed. The aim of the treatment is to clean the surface of the fabric so that the subsequent polymers can be deposited more easily.

Figure 3 shows the fabric of Figure 2 after plasma a plasma etching step. The plasma etching step roughens the surface of the substrate or fiber to make it easier for subsequent layers to adhere. Sometimes this roughening is seen as the creation of nano/micro-grooves on the filament surface. On the right side an enlarged view of the surface of the fiber is show. Here the irregularities and the roughness are illustrated.

Finally, Figure 4 shows the fabric of Figure 3 after a subsequent PECVD step. The plasma polymerization created a very thin coating incorporating functional groups at least one selected from a group consisting of hydroxyl group, carboxyl group, amino group and sulfonate group. Due to the dimensions of irregularities and the roughness as well as the very thin coating, also after the coating material of the fiber remains partly uncoated. This has the advantage that when the ion exchange membrane material is applied to the fabric, on one hand it is chemically bonded to the plasma coating of the fabric and on the other hand, the relatively high roughness compared to the thin plasma coating also allows for mechanical interlocking.

In the following different fabrics are considered to further explain the invention. Table 1 summarizes the fabric technical features for plain weave structure. This information is interesting for understanding their behavior and the inventive reinforcing woven structure of the ion-exchange membrane.

**Table 1.** Example fabric properties

| Fabric | Calendering | Material | Filament diameter [$\mu$m] | | Mesh opening [$\mu$m] | | Open area [%] | Fabric thickness [$\mu$m] |
|---|---|---|---|---|---|---|---|---|
| | | | Warp | Weft | Warp | Weft | | |
| P | Uncalendered | PEEK | 38 | 38 | 195 | 195 | 70 | 60 |
| Q | Uncalendered | PEEK | 26 | 26 | 100 | 100 | 63 | 45 |
| R | 1xcalendered | PEEK | 38 | 38 | 190 | 195 | 70 | 50 |
| S | 2xcalendered | PEEK | 38 | 38 | 190 | 195 | 70 | 40 |
| T | Uncalendered | PPS | 38 | 38 | 195 | 195 | 70 | 60 |
| U | Uncalendered | LCP | 38 | 38 | 195 | 195 | 70 | 60 |
| V | Uncalendered | PFA | 38 | 38 | 195 | 195 | 70 | 60 |

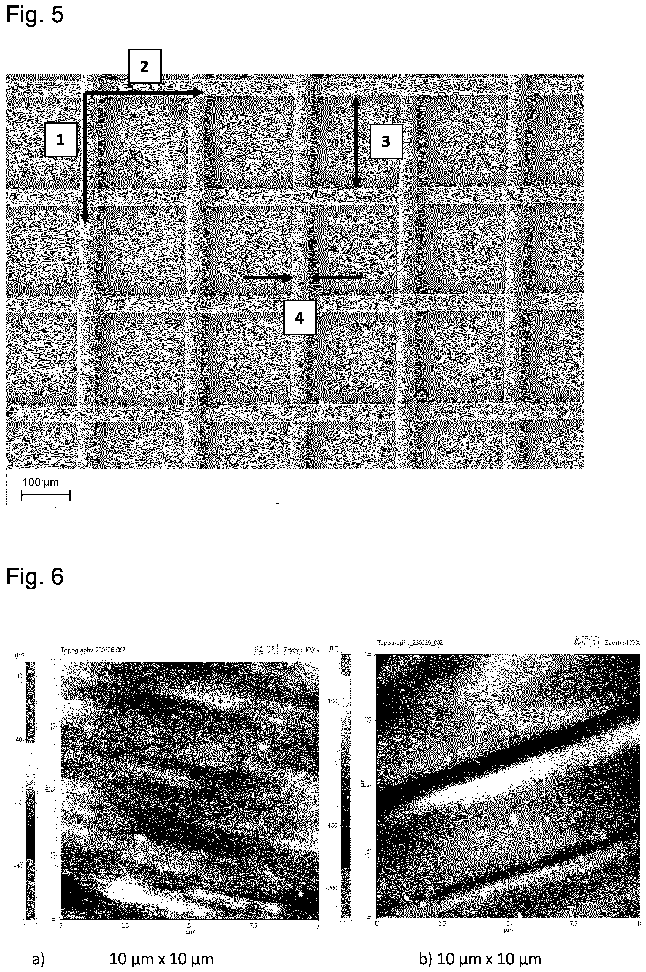

To illustrate theses dimensions Figure 5 shows a SEM image of a woven mesh which has a mesh opening (3) (weft or warp) of 195 $\mu$m, a filament diameter (4) (weft or warp) of 38 $\mu$m and a thickness of 60 $\mu$m can be seen in fabric P. Also, the weft (1) and warp (2) direction is indicated, which however for this fabric could also be interchanged.

Calendering process

In order to obtain the suitable thickness of the woven mesh, which will be later used as a reinforcing and supporting layer for the ion-exchange membrane, a fabric P has been exposed to calendering process whereby the fabric is compressed by passing between two rollers under controlled conditions of time, temperature and pressure. Two steps process have been successively conducted one time on the face side of the fabric and second time on the back side at 160°C applying a pressure of 300 N/mm$^2$ and a line speed of 2 m/min. Consequently, a decrease in thickness is obtained while keeping fabric open area unchanged.

**Table 2.** Fabric before and after calendaring process

| Fabric | Calendering | Open area [%] | Fabric thickness [μm] |
|---|---|---|---|
| P | Before calendering | 70 | 60 |
| R | 1 x calendering | 70 | 50 |
| S | 2 x calendering | 70 | 40 |

Cleaning process

Inadequate cleanliness of the woven reinforcing layer in polymer ion exchange membrane applications can lead to significant performance degradation and reduced operational lifespan. Contaminants, particularly cationic species, can replace protons in the membrane, adversely affecting ionic conductivity and overall cell efficiency. In fact contaminants can occupy active sites in the catalyst layer, reducing the electrochemical surface area and hindering reaction kinetics. Therefore, a high degree of cleanliness is desired. As can be seen in Table 3, a woven PEEK fabric P has been exposed to different treatments such as washing followed by thermal fixation, thermal fixation only and thermal fixation followed by low pressure plasma cleaning. Before the treatment, the fabric has a hydrophilic character because spin finish is added during its processing. The treated fabric has been investigated using an extraction method with ethanol 96% and petrolether according to standard DIN EN ISO 11354:2012-06.

It is evident that a better cleanliness level was obtained using thermal fixation only, as compared to two steps processing such as washing & thermal fixation. Even higher level of cleanliness of woven fabric could be reached by the combination of a suitable thermal fixation followed by plasma cleaning. During plasma cleaning process energetic ions collide with the filament surface and remove remaining fine contaminants from the surface. In addition to the fine cleaning effect, the plasma cleaning promotes the formation of active polar groups on the fabric surface confirmed by lower water contact angle (Table 3). The contact angles were measured according to DIN EN ISO 19403:2020-04.

**Table 3.** Different cleaning treatments

| Fabric | Treatment type | Extractables Ethanol 96% [mg/m²] | Extractables Pertolether [mg/m²] | Water contact angle [°] |
|---|---|---|---|---|
| P | Before treatment | 26 | 6 | 65 |
| | After washing & thermal fixation | 11 | 4 | 138 |
| | After thermal fixation only | 5 | 2 | 136 |
| | After thermal fixation & plasma cleaning | 3 | 2 | 59 |

Plasma etching

Plasma etching is done using an appropriate gaseous mixture. Examples include oxygen and tetrafluoromethane ($CF_4$), when mixed together during plasma etching, create the oxyfluoride ion (OF-) which is a powerful etching agent for removing solid from polymeric surface by chemical transformation of it into small volatile molecules. The etched surface has been characterized by means of an Atomic Force Microscopy (AFM). The root-mean-square roughness Rq and the average roughness Ra were increased using two different power sources such as direct bias and remote plasmas. The direct bias plasma having a plasma power of 500 V shows best results with Rq 130 nm and Ra 105 nm on fabric P.

Topographical changes made by etching process are further investigated by AFM images. It can be seen that the etching conditions resulted a homogeneous texturing and roughening of the PEEK surface compared to the untreated fabric.

In Figure 6 two AFM images of PEEK fabric P are shown, wherein a) is untreated and b) is etched by remote plasma at 1300 W.

A water contact angle has been measured according to DIN EN ISO 19403:2020-04 on two different fabric types which have been etched using respectively direct bias and remote plasma. In addition to etching effect, the chemical functional groups are introduced on the filament surface which alter surface energy in particular for remote plasma etching process. Independently from the fabric type there is a significant decrease in water contact angle, demonstrating the tendency of achieving higher wettability with the membrane coating.

**Table 5.** Example of water contact angle measured on etched PEEK fabrics Ion exchange membrane

| Fabric | Etching type | Plasma power | Water contact angle [°] |
|---|---|---|---|
| P | Direct bias | 500 V | 133 |
| | Remote plasma | 1300 W | 85 |
| | Untreated | None | 133 |
| Q | Direct bias | 500 V | 112 |
| | Remote plasma | 1300 W | 100 |
| | Untreated | None | 129 |

The uncharged and inert woven fabric acts as physical barrier in ion exchange membrane. This physical barrier favours when there is a good compatibility between membrane coating and woven fabric. Thus, the functionalization of reinforcement materials with a suitable ionic group can significantly enhance the thermal stability and resistance to degradation in an end application. This improvement is primarily attributed to better interfacial interactions between the reinforcements and the polymer matrix, leading to higher coating uniformity and better integrity of the woven fabric in the ion exchange matrix. As a consequence, an enhanced mechanical and thermal properties can be obtained on reinforced ion exchange membranes.

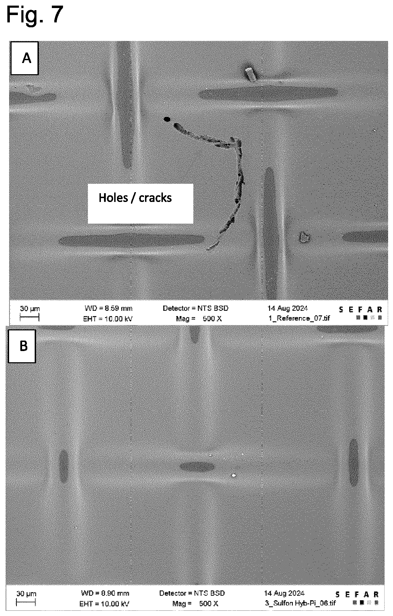

The fabric P has been SOs-functionalized and coated with Nafion membrane and compared the performance with uncoated P. The Nafion-coated samples A and B have been investigated by Scanning Electron Microscope (SEM) as can be seen in Figure 7. As can be seen in photograph A, the membrane coating on the untreated fabric leads to defects (hole, cracks) and air bubbles creation. This is due to less affinity and a bad pore filling of the polymer into the incompatible fabric. On the contrary, a very homogeneous infiltration, swelling of the coating material can be seen in photograph B indicating a uniform coating application and a good adhesion between the functionalized fabric and the Nafion coating.

It is evident that the functionalization of the reinforcing layer of the ion-exchange membrane improves drastically the consolidation and the performance of the resulted composite (photograph B). On the contrary, a loss of coating adhesion to the surface of untreated woven mesh causes coating defects and inhomogeneity, as can be seen in photograph A.

Plasma nanocoating offers significant advantages over conventional coatings in enhancing the interfacial properties of composite materials. These advanced coatings leverage nanoscale effects to improve mechanical performance, durability, and functionality. In this sense, three fabrics respectively P, Q and T have been functionalized with hydroxyl groups in order to prepare them for the subsequent ionomer coating. Like table 6 shows, the water contact angle drops drastically after performing the plasma nanocoating. This means a higher surface energy on the fabric surface has been obtained which in turn leads to enhanced wettability, adhesion, and reactivity.

**Table 6.** Example of water contact angle measured on plasma coated fabrics

| Fabric | Treatment type | Water contact angle [°] |
|---|---|---|
| P | OH plasma coated | 62 |
| | Untreated | 133 |
| Q | OH plasma coated | 57 |
| | Untreated | 129 |
| T | OH plasma coated | 64 |
| | Untreated | 135 |

The coating durability i.e. self-life of coatings was investigated using real time aging as well as an accelerated aging test according to ASTM F1980-16 (55°C / 20% RH, 10 days). It can be seen in Table 7 that the water contact angles remain almost unchanged for both aging types.

**Table 7.** Example of water contact angle on plasma coated and aged fabric P

| Fabric | Water contact angle [°] | | | | |
|---|---|---|---|---|---|
| | After treatment | After accelerated aging | After 4 months real time aging | After 9 months real time aging | After 24 months real time aging |
| Untreated P | 130±1 | | | | |
| OH plasma-coated P | 59 | 63 | 62 | 62 | 63 |

Based on the invention it is possible to provide a method for preparing woven mesh fabric as a reinforcement fabric for ion exchange membrane applications having improved membrane coating properties for ion exchange membrane applications.

## Claims

1. Method for improving membrane coating properties for ion exchange membrane applications with a woven mesh fabric as a reinforcement fabric, the woven mesh fabric comprising warp and weft monofilament fibers of at least one of the following polymers:

   polyphenylene sulfide, polyether ether ketone, perfluoroalkoxy alkanes, fluorinated ethylene propylene and liquid crystal polyester, wherein one monofilament fiber is made of only one of the polymers,
   wherein the method comprises:

   a fixation step, which is carried out after weaving of the woven mesh fabric, wherein the woven mesh fabric is subjected to at least one thermal treatment between 240°C and 350°C to fix the mesh opening into desired dimensions and stabilize the monofilament fibers of the woven mesh fabric as well as to remove surface contaminants from the monofilament fibers,
   one or more preparation steps are carried out comprising:

   • a plasma pre-treatment step of the woven mesh fabric is carried out for further fine cleaning the surface of the woven mesh fabric especially by removal of impurities, strong adhering dust particles and organic, inorganic and microbial contaminants from the filament surface,
   • a plasma etching step of exposing the woven mesh fabric to plasma for etching the surface of the monofilament fibers of the woven mesh fabric to an average roughness between 30 nm and 200 nm;

   a subsequent coating step of depositing a plasma coating on the woven mesh fabric by means of plasma polymerization incorporating functional groups at least one selected from a group consisting of hydroxyl group, carboxyl group, amino group and sulfonate group,
   wherein one or more preparation steps and coating step are performed in a plasma chamber having a plurality of rollers in a roll to roll system which operates with a radiofrequency of about 13.56 MHz, having a first electrode set and a second electrode set within the plasma chamber, and the woven mesh fabric being passed through plasma zones between the electrode sets, thereby having treatment on both sides of the woven mesh fabric,
   wherein the woven mesh fabric comprises a filament diameter between 10 $\mu$m and 60 $\mu$m and a mesh opening of 20 $\mu$m or more and having a fabric thickness between 20 $\mu$m and 80 $\mu$m.

2. Method according to claim 1,
   **characterized in that**
   the at least one functional group is chosen to match an ionic group of the ion exchange membrane and/or to improve the wettability of the woven mesh fabric for the ion exchange membrane during coating of the woven mesh fabric.

3. Method according to claim 1 or 2,
   **characterized in that**

   the one or more preparation steps are carried out at low-pressure plasma conditions under protective atmosphere and/or

the coating step is a low pressure plasma polymerization process.

4. Method according to any one of the claims 1 to 3,
**characterized in that**

the plasma pre-treatment step is carried out using an inert gas or a reactive gas or a gaseous mixture thereof and/or
the plasma etching step is carried out using oxygen or fluorinated etchant gases or a gaseous mixture thereof.

5. Method according to any one of the claims 1 to 4,
**characterized in that**

in the coating step of depositing the plasma coating by means of the plasma polymerization incorporating the functional groups

• a reactive gaseous mixture or
• a monomer vapor consisting of

○ a monomer or
○ a mixture of monomer and

▪ helium or argon

is used.

6. Method according to any one of the claims 1 to 5,
**characterized in that**
the one or more preparation steps and the subsequent coating step being carried out in one processing stage or two processing stages being temporally offset.

7. Method according to any one of the claims 1 to 6,
**characterized in that**
plasma power during the plasma pre-treatment step is lower than 5 W/cm$^2$ of electrode surface, preferably lower than 3 W/cm$^2$ of electrode surface or more preferably lower than 2 W/cm$^2$ of electrode surface.

8. Method according to any one of the claims 1 to 7,
**characterized in that**
plasma power during the plasma etching step is lower than 1 W/cm$^2$ of electrode surface, preferably lower than 1000 mW/cm$^2$ of electrode surface or more preferably lower than 500 mW/cm$^2$ of electrode surface.

9. Method according to any one of the claims 1 to 8,
**characterized in that**
plasma power during the plasma coating step is lower than 1 W/cm$^2$ of electrode surface, preferably lower than 500 mW/cm$^2$ of electrode surface or more preferably lower than 200 mW/cm$^2$ of electrode surface.

10. Method according to any one of the claims 1 to 9,
**characterized in that**
the woven mesh fabric is calendered mesh fabric.

11. Method according to any one of the claims 1 to 10,
**characterized in that**
prior to the one or more preparation steps the woven mesh fabric is passed between two rollers at raised temperature between 120°C and 200°C and a pressure between 200 N/mm$^2$ and 450 N/mm$^2$ and a material speed between 1 m/min and 4 m/min using a roll to roll calendering machine.

12. Method according to any one of the claims 1 to 11,
**characterized in that**

the woven mesh fabric after the coating step has a water contact angle corresponding to

• for incorporated hydroxyl or carboxyl groups between 20° and 90°, preferably between 40° and 80° and more preferably between 50° and 70° and
• for incorporated sulfonate and amino groups between 80° and 145°, preferably between 110° and 135°

wherein the water contact angle is determined according to DIN EN ISO 19403:2020-04.

13. Method according to any one of the claims 1 to 12,
**characterized in that**
the average roughness after the plasma etching step is between 50 nm and 120 nm.

14. Method according to any one of the claims 1 to 13,
**characterized in that**
the plasma coating has a thickness from 10 nm to 200 nm and preferably from 20 nm to 80 nm.

15. Method according to any one of the claims 1 to 14,
**characterized in that**
a treatment time for the coating step and for the pre-treatment step is for each step around 4 minutes or less and for the plasma etching step is around 8 minutes or less.

16. Method according to any one of the claims 1 to 15,
wherein the temperature of the electrodes of the electrode sets and/or a chamber wall defining the plasma chamber is controlled to be between 30°C and 100° C preferably between 35°C and 80°C

17. Woven mesh fabric having improved membrane coating properties for ion exchange membrane applications as a reinforcement fabric, wherein the woven mesh fabric comprises warp and weft monofilament fibers of at least one of the following polymers:

polyphenylene sulfide, polyether ether ketone, perfluoroalkoxy alkanes, fluorinated ethylene propylene and liquid crystal polyester,
wherein one monofilament fiber is made of only one of the polymers,
wherein the monofilament fibers of the woven mesh fabric are fixed and dimensionally stabilize to each other after weaving by subjecting the woven mesh fabric to a thermal treatment between 240°C and 350°C and surface contaminants being removed,
being prepared by one or more preparation steps comprising:

• a plasma pre-treatment step of the woven mesh fabric is carried out for further fine cleaning the surface of the woven mesh fabric especially by removal of impurities, strong adhering dust particles and organic, inorganic and microbial contaminants from the filament surface,
• a plasma etching step of exposing the woven mesh fabric to plasma for etching the surface of the monofilament fibers of the woven mesh fabric to an average roughness between 30 nm and 200 nm;

being subsequently coated by depositing a plasma coating on the woven mesh fabric by means of plasma polymerization incorporating functional groups at least one selected from a group consisting of hydroxyl group, carboxyl group, amino group and sulfonate group,
wherein the woven mesh fabric comprises a filament diameter between 10 $\mu$m and 60 $\mu$m and a mesh opening of 20 $\mu$m or more and having a fabric thickness between 10 $\mu$m and 80 $\mu$m.

18. Woven mesh fabric according to claim 17,
**characterized in that**

having a water contact angle corresponding to

• for incorporated hydroxyl or carboxyl groups between 20° and 90°, preferably 40° and 80° and more preferably between 50° and 70° and
• for sulfonate and amino groups between 80° to 145°, preferably between 110° and 135°

wherein the water contact angle is determined according to DIN EN ISO 19403:2020-04.

Fig. 1

Fig. 2

Fig. 3

Fig. 4

## Fig. 5

100 µm

## Fig. 6

a)          10 µm x 10 µm                    b) 10 µm x 10 µm

Fig. 7

Europäisches
Patentamt

European
Patent Office

Office européen
des brevets

## EUROPEAN SEARCH REPORT

**Application Number**

EP 24 21 8809

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 214 770 B (SHANDONG EASTERN YUE POLYMER MAT CO LTD) 18 July 2023 (2023-07-18) * paragraph [0001]; examples 1-2 * ----- | 1-18 | INV. D06M10/02 D06M10/08 D06M10/06 D06M14/28 D06M15/705 D06M101/22 B01D67/00 B01D69/10 D06M101/32 D06M101/30 |
| Y | CN 104 746 202 A (TORAY FIBER RES INST CN CO LTD) 1 July 2015 (2015-07-01) * paragraphs [0002], [0009], [0011], [0016], [0017], [0023] - [0028], [0034]; examples 1,3 * ----- | 1-18 | |
| Y | CN 101 252 175 A (SHENZHEN FUYIDA ELECTRONIC TEC [CN]) 27 August 2008 (2008-08-27) * paragraphs [0001], [0010], [0032] - [0035]; claim 1 * ----- | 6 | |
| Y | US 2023/136835 A1 (HOSSAIN MOHAMMAD MOKBUL [CH] ET AL) 4 May 2023 (2023-05-04) * paragraphs [0001], [0020], [0025], [0029] - [0031], [0038], [0063] - [0067]; figure 6; example 1 * ----- | 1-18 | |
| A | EP 2 947 709 B1 (TORAY INDUSTRIES [JP]) 6 November 2019 (2019-11-06) * paragraphs [0001], [0005], [0007]; examples 1-3 * ----- | 1-18 | |

**TECHNICAL FIELDS SEARCHED (IPC)**

D06M
B01D

The present search report has been drawn up for all claims

| Place of search | Date of completion of the search | Examiner |
|---|---|---|
| The Hague | 6 June 2025 | Menard, Claire |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 21 8809

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | Publication date | Patent family member(s) | | Publication date |
|---|---|---|---|---|---|
| CN 114214770 | B | 18-07-2023 | NONE | | |
| CN 104746202 | A | 01-07-2015 | NONE | | |
| CN 101252175 | A | 27-08-2008 | NONE | | |
| US 2023136835 | A1 | 04-05-2023 | CN | 116065401 A | 05-05-2023 |
| | | | EP | 4177050 A1 | 10-05-2023 |
| | | | JP | 7493009 B2 | 30-05-2024 |
| | | | JP | 2023070108 A | 18-05-2023 |
| | | | KR | 20230065918 A | 12-05-2023 |
| | | | US | 2023136835 A1 | 04-05-2023 |
| EP 2947709 | B1 | 06-11-2019 | CN | 103938337 A | 23-07-2014 |
| | | | CN | 105027324 A | 04-11-2015 |
| | | | DK | 2947709 T3 | 20-01-2020 |
| | | | EP | 2947709 A1 | 25-11-2015 |
| | | | ES | 2765951 T3 | 11-06-2020 |
| | | | HU | E047840 T2 | 28-05-2020 |
| | | | US | 2015354074 A1 | 10-12-2015 |
| | | | WO | 2014111053 A1 | 24-07-2014 |

EPO FORM P0459

For more details about this annex : see Official Journal of the European Patent Office, No. 12/82